# EUROPÄISCHE PATENTSCHRIFT

(11) **EP 1 240 742 B1**
(45) Veröffentlichungstag und Bekanntmachung des Hinweises auf die Patenterteilung: **28.04.2004**
(21) Anmeldenummer: 00990673.6
(22) Anmeldetag: 07.12.2000
(51) Int. Cl.: H04L 5/00

(54) **ANORDNUNG ZUM ERZEUGEN EINES ANALOGEN I/Q-SIGNALS AUS ZWEI ODER MEHREREN DATENSTRÖMEN**
SYSTEM FOR GENERATING AN ANALOGUE I/Q SIGNAL FROM TWO OR MORE DATA STREAMS
SYSTEME POUR LA GENERATION D'UN SIGNAL D'E/S ANALOGIQUE A PARTIR DE DEUX OU PLUSIEURS FLUX DE DONNEES

(30) Priorität: 23.12.1999 DE 19962760
(43) Veröffentlichungstag der Anmeldung: 18.09.2002
(73) Patentinhaber: Rohde & Schwarz GmbH & Co. KG, D-81671 München (DE)
(72) Erfinder: HECHT, Andreas, 82223 Eichenau (DE)
(74) Vertreter: Körfer, Thomas, Dipl.-Phys.
(86) Internationale Anmeldenummer: PCT/EP2000/012354
(87) Internationale Veröffentlichungsnummer: WO 2001/048996

(56) Entgegenhaltungen:
- EP-A- 0 534 255
- EP-A- 0 588 542
- EP-A- 0 589 594
- EP-A- 0 680 169
- DE-A- 19 957 093
- US-A- 5 425 050

## Beschreibung

Die Erfindung betrifft eine Anordnung zum Erzeugen eines analogen oder digitalen I/Q-Signals für einen I/Q-Modulator, das aus zwei oder mehreren nach gleichen oder unterschiedlichen digitalen Modulationsverfahren aufbereiteten Datenströmen zusammengesetzt ist.

In der modernen Übertragungstechnik werden zur Datenübertragung I/Q-Signale eingesetzt, die in einem I/Q-Modulator auf einen Hochfrequenzträger aufmoduliert werden. Für die Erzeugung dieser I/Q-Signale für den I/Q-Modulator gibt es die verschiedenartigsten Modulationsstandards. Ein häufig benutztes Modulationsverfahren ist beispielsweise das in Europa und USA für Mobilfunkzwecke benutzte Zeitmultiplexverfahren TDMA oder das Codiermultiplexverfahren CDMA. Bei solchen Systemen ist es oftmals wünschenswert, über ein und denselben Hochfrequenzträger und mit dem gleichen I/Q-Modulator zwei oder mehrere I/Q-Signale zu übertragen, die nach dem gleichen digitalen Modulationsstandard, jedoch mit unterschiedlichen Eingangsdatenströmen aufbereitet sind oder die nach unterschiedlichen digitalen Modulationsstandards aufbereitet sind. Man kann diese unterschiedlichen I/Q-Signale jeweils getrennt in entsprechenden Modulationscodern oder Modulationsgeneratoren erzeugen und dann addieren; dies ist jedoch relativ aufwendig.

Es ist daher Aufgabe der Erfindung, eine Anordnung zu schaffen, mit der dies mit wesentlich verringertem Schaltungsaufwand möglich ist.

Diese Aufgabe wird ausgehend von einer Anordnung laut Oberbegriff des Hauptanspruches durch dessen kennzeichnende Merkmale gelöst. Eine vorteilhafte Weiterbildung ergibt sich aus dem abhängigen Anspruch 2.

Gemäß der Erfindung erfolgt die Zusammenfassung der aus zwei oder mehreren nach gleichen oder unterschiedlichen digitalen Modulationsverfahren aufbereiteten Datenströme noch vor der D/A-Wandlung auf rein digitalem Wege und zwar in einem üblichen Modulationscoder, wie er für die Aufbereitung eines digitalen Datenstromes zu einem analogen I/Q-Signal an sich bekannt ist. Es ist lediglich erforderlich, an vorbestimmten Stellen der I/Q-Zweige entsprechende Addierstufen zwischenzuschalten, über die dann noch vor der D/A-Wandlung die digitalen I/Q-Werte eines weiteren Modulationsgenerators zugesetzt werden können. Für die Signalaufbereitung der I/Q-Werte des zusätzlichen Modulationsgenerators werden auf diese Weise eine Reihe von Baugruppen überflüssig, da diese von dem Modulationscoder mitbenutzt werden können, beispielsweise der Taktgenerator, der digitale Signalprozessor für die Steuerung, die D/A-Wandler und die nachfolgenden Tiefpaßfilter. Der zusätzliche Modulationsgenerator kann dabei von beliebiger bekannter Art sein. Es kann sich hierbei beispielsweise um einen weiteren Modulationscoder handeln, der aus einem internen oder externen digitalen Eingangsdatenstrom durch Codierung und Mapping nach einem beliebigen bekannten Modulationsstandard die zuzusetzenden I/Q-Werte erzeugt. Für Meßzwecke kann dieser zusätzliche Modulationsgenerator auch vorher berechnete I/Q-Werte in einem Speicher enthalten, die im Systemtakt ausgelesen und den Addierern zugeführt werden, wie dies beispielsweise beim Modulationsgenerator AMIQ der Firma Rohde & Schwarz an sich bekannt ist.

Das erfindungsgemäße Verfahren eignet sich besonders gut für eine Anordnung zum Erzeugen eines digitalmodulierten Prüfsignals nach der älteren, nicht vorveröffentlichten Patentanmeldung DE 199 57 093 A1 der Firma Rohde & Schwarz, bei welcher ein Teil der Übertragungskanäle des Prüfsignals in einem Modulationscoder unmittelbar aus einem internen oder externen Modulations-Datenstrom nach einem vorbestimmten Modulationsstandard erzeugt wird und bei dem die I- und Q-Werte für mindestens einen Teil der restlichen Kanäle des Prüfsignals als vorberechnete Modulations-Datenfolge begrenzter Länge aus einem Speicher dem Modulationscoder zugeführt werden; die so getrennt erzeugten I- und Q-Werte werden dann addiert und dem I/Q-Modulator zugeführt.

Die Erfindung wird im Folgenden anhand einer schematischen Zeichnung an einem Ausführungsbeispiel näher erläutert.

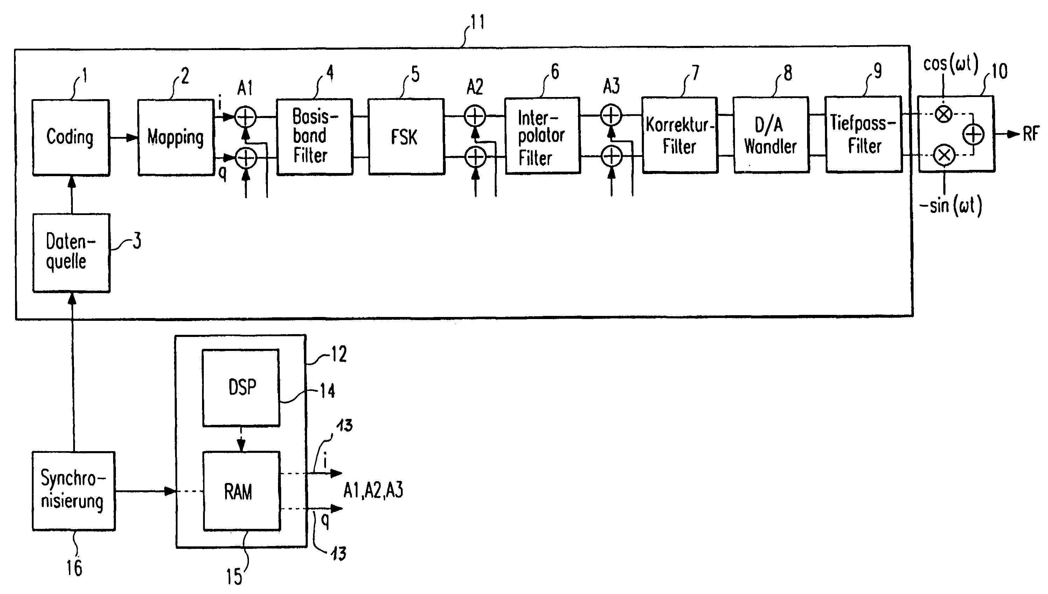

Die Figur zeigt das Prinzipschaltbild eines bekannten Modulationscoders 11, wie er beispielsweise im Vektorsignalgenerator SMIQ der Firma Rohde & Schwarz, Datenblatt PD757.4582 benutzt wird. Dieser Modulationscoder 11 besteht aus einer Codier- und Mapping-Einheit 1, 2, in welcher aus dem Datenstrom einer internen oder externen Datenquelle 3 je nach gewählter Modulationsart entsprechende I- und Q-Werte erzeugt werden. Von der Mapping-Einheit 2 gelangen die I/Q-Werte zu einem Basisbandfilter 4, in welchem eine entsprechende Impulsformung durchgeführt wird, und dann zu einem Modulationsformat-Wandler 5, in welchem die Eingangssignale entweder in eine lineare PSK- bzw. QAM-Modulation oder in eine nichtlineare FSK-Modulation umgesetzt werden. Hinter diesem Modulationsformat-Wandler ist ein Interpolationsfilter 6 vorgesehen. Die Reihenfolge der Stufen 5 und 6 kann auch vertauscht werden. Hinter dem Interpolationsfilter 6 kann gegebenenfalls noch ein Korrekturfilter 7 angeordnet sein. Die so in getrennten I- und Q-Zweigen digital aufbereiteten I/Q-Werte werden im D/A-Wandler 8 in entsprechende analoge I/Q-Signale umgeformt und nach Durchlaufen von Tiefpaßfiltern 9 dann dem eigentlichen I/Q- Modulator 10 zugeführt, in welchem sie einem Hochfrequenzträger aufmoduliert werden.

Zusätzlich zu dieser bekannten Modulationscoder-Anordnung sind in den digitalen I/Q-Zweigen noch Addierstufen A1 bis A3 zwischengeschaltet und zwar können entweder Addierstufen A1 zwischen der Mapping-Einheit 2 und den Basisfiltern 4 angeordnet sein, oder Addierstufen A2 zwischen dem Modulationsformat-Wandler 5 und dem Interpolationsfilter 6 oder Addierstufen A3 erst hinter dem Interpolatorfilter 6, jedoch noch vor dem Korrekturfilter 7 (falls vorhanden) und dem D/A-Wandler 8.

Neben diesem durch eine oder mehrere Addierstufen ergänzten Modulationscoder 11 ist ein weiterer Modulationsgenerator 12 vorgesehen, der an seinem I/Q-Ausgang 13 wieder nach einer bekannten komplexen Modulationsart erzeugte I/Q-Werte liefert. In dem gezeigten Ausführungsbeispiel ist dieser zusätzliche Modulationsgenerator 12 als sogenannter Arbitrary Waveform Generator ausgebildet, wie er beispielsweise im Gerät AMIQ der Firma Rohde & Schwarz, Datenblatt PD757.3970.12 benutzt wird. Die berechneten I- und Q-Werte werden in einem Speicher 15 abgespeichert. Aus diesem Speicher 15 können sie gesteuert über einen Taktgenerator und einen entsprechenden Adressengenerator als I/Q-Werte zum Ausgang 13 ausgelesen werden. Das Ein- und Auslesen der Daten aus der Datenquelle 3 in den Codierer 1 und das Auslesen der I/Q-Werte aus dem Speicher 15 wird über die Synchronisiereinheit 16 synchronisiert. Die I/Q-Werte vom Ausgang 13 können nun entweder den Addierstufen A1, A2 oder A3 zugeführt werden, so daß die digitalen I/Q-Werte des zusätzlichen Modulationsgenerators 12 mit den digitalen I/Q-Werten des Modulationscoders 11 kombiniert und nach Digital/Analog-Wandlung dann als zusammengesetzte Signale dem I/Q-Modulator 10 zugeführt und über ein und denselben Hochfrequenzträger abgestrahlt werden.

Beim Zusetzen der I/Q-Werte vom Ausgang 13 zu den Addierern A1 (die Addierer A2 und A3 können in diesem Fall entfallen oder überbrückt werden) werden die I/Q-Werte des Modulationscoders 11 vom Ausgang der Mapping-Einheit 2 in Echtzeit und im Symboltakt mit den I/Q-Werten des Modulationsgenerators 12 addiert, die Basisbandfilter werden so eingestellt, daß sie wie bei Modulationscodern üblich eine Impulsformung bewirken. Bei dieser Art der Kombination über Addierer A 1 sind die Basisbandfilter sowie das Modulationsformat (linear PSK bzw. QAM oder FSK-Modulation) für beide I/Q-Werte gleich.

Bei Zuführung der I/Q-Werte vom Ausgang 13 zu den Addierern A2 werden die I/Q-Werte vor dem Interpolationsfilter zusammengeführt. Um hierbei jeweils gleiche Datenraten zu erhalten, werden die I/Q-Werte im Modulationsgenerator 12 entweder bereits bei der Datenspeicherung im Speicher 15 entsprechend vorbereitet oder es wird noch ein zusätzlicher nicht dargestellter Datenraten-Konvertierer zwischengeschaltet. In diesem Fall kann die Basisbandfilterung für die beiden I/Q-Werte unterschiedlich sein. Nachdem die Addierung erst nach dem Modulationsformat-Wandler 5 erfolgt, können auch unterschiedliche Modulationsformate benutzt werden. Bei Vertauschung der Reihenfolge zwischen den Einheiten 5 und 6 (der Modulationsformat-Wandler 5 ist hinter dem Interpolationsfilter 6 angeordnet) erfolgt die Addierung vor der Modulationsformat-Wandlung und in diesem Fall können die Modulationsformate für die beiden Signale nicht unterschiedlich gewählt werden.

Eine dritte Möglichkeit besteht schließlich darin, über die Addierer A3 die Zusammenführung der Signale erst vor dem D/A-Wandler 8 bzw. vor einem eventuell vorhandenen Korrekturfilter 7 vorzunehmen.

In gleicher Weise können auch I/Q-Werte von zwei oder mehr zusätzlichen Modulationsgeneratoren 12 mit den I/Q-Werten des Modulationscoders 11 kombiniert werden, dies kann an jeder der Stellen A1, A2 oder A3 erfolgen, die Addierer sind in diesem Fall mit drei oder mehr Eingängen ausgestattet. Die Addierung kann jedoch auch auf verschiedene Stellen aufgeteilt werden, beispielsweise derart, daß über die Addierer A 1 die I/Q-Werte eines ersten Modulationsgenerators 12 hinzuaddiert werden, über die Addierer A2 die I/Q-Werte eines zweiten Modulationsgenerators 12' usw..

Die Anordnung kann auch nur zur Aufbereitung der I/Q-Werte des Modulationsgenerators 12 benutzt werden, in diesem Fall ist der Codierer 1 und die Mapping-Einheit 12 nicht wirksam. Über die Addierstufen A1 werden also nur die I/Q-Werte des Modulationsgenerators 12 dem Basisbandfilter zugeführt. Das Basisbandfilter 4 ist in diesem Fall als Tiefpaß zur Bandbegrenzung programmiert oder als Interpolationsfilter, wobei dann das eigentliche Interpolationsfilter 6 entweder entfallen kann oder so eingestellt wird, daß es als kaskadiertes Interpolationsfilter wirkt. Durch ein zwischengeschaltetes Korrekturfilter 7 können alle Fehler korrigiert werden, die im Signalpfad auftreten.

## Patentansprüche

1. Signalgenerator zum Erzeugen eines I/Q-Signals, das aus zwei oder mehreren nach gleichen oder unterschiedlichen digitalen Modulationsverfahren aufbereiteten Datenströmen zusammengesetzt ist, mit einem Modulationscoder (11) bestehend aus der Reihenschaltung
einer Codier- und Mapping-Einheit (1, 2),
eines nachfolgenden in seinen Filtereigenschaften einstellbaren digitalen Basisbandfilters (4),
eines nachgeordneten digitalen Modulationsformat-Wandlers (5),
eines vor oder nach diesem Modulationsformat-Wandler (5) angeordneten Interpolationsfilters (6),
gegebenenfalls eines zusätzlichen digitalen Korrekturfilters (7)
und eines Digital/Analog-Wandlers (8) mit nachgeschaltetem analogen Tiefpaßfilter (9),
wobei in diesem Modulationscoder (11) aus einem ersten digitalen Eingangsdatenstrom (3) entsprechende digitale I/Q-Werte und daraus nach Digital/Analog-Wandlung die entsprechenden analogen I/Q-Signale erzeugt werden,
**dadurch gekennzeichnet,**
**daß** in den I/Q-Zweigen dieses Modulationscoders (11) direkt vor dem Basisbandfilter (4) ein erster Addierer (A1) angeordnet ist und
**daß** bei Anordnung des Interpolationsfilters (6) nach dem Modulationsformat-Wandler (5) zwischen diesem Modulationsformat-Wandler (5) und dem Interpolationsfilter (6) bzw. bei Anordnung des Interpolationsfilters (6) vor dem Modulationsformat-Wandler (5) zwischen dem Basisbandfilter (4) und dem Modulationsformat-Wandler (5) ein zweiter Addierer (A2) direkt vor dem Modulationsformat-Wandler (5) angeordnet ist und
**daß** über diese beiden Addierer (A1, A2) jeweils digitale I/Q-Werte, die in mindestens einem Modulationsgenerator (12) berechnet oder aus einem weiteren digitalen Eingangsdatenstrom generiert werden, vor dem Digital/Analog-Wandler (8) den digitalen I/Q-Werten des Modulationscoders (11) hinzuaddierbar sind.

2. Signalgenerator nach Anspruch 1,
**dadurch gekennzeichnet,**
**daß** in den I/Q-Zweigen des Modulationscoders (11) hinter dem Interpolationsfilter (6) jedoch vor dem Digital/Analog-Wandler (8) und vor einem eventuell vorhandenen Korrekturfilter (7) ein weiterer dritter Addierer (A3) angeordnet ist, über welchen jeweils vor dem Digital/Analog-Wandler (8) ebenfalls weitere in einem Modulationsgenerator (12) generierte digitale I/Q-Werte den digitalen I/Q-Werten des Modulationscoders (11) hinzuaddierbar sind.

## Claims

1. Signal generator for generating an I/Q signal that is. composed of two or more data streams processed by identical or different digital modulation methods, having a modulation encoder (11) comprising the series connection of
an encoding and mapping unit (1, 2),
a downstream digital base-band filter (4) whose filter properties are adjustable,
a downstream digital modulation format converter (5),
an interpolation filter (6) disposed upstream or downstream of said modulation format converter (5),
optionally an additional digital correction filter (7)
and a digital/analog converter (8) with downstream analog low-pass filter (9),
wherein, in said modulation encoder (11), corresponding digital I/Q values are generated from a first digital input data stream (3) and the corresponding analog I/Q signals are generated therefrom after digital/analog conversion,
**characterized**
**in that** a first adder (A1) is disposed in the I/Q branches of said modulation encoder (11) immediately upstream of the base-band filter (4) and
**in that**, if the interpolation filter (6) is disposed downstream of the modulation format converter (5) between said modulation format converter (5) and the interpolation filter (6), or if the interpolation filter (6) is disposed upstream of the modulation format converter (5) between the base-band filter (4) and the modulation format converter (5), a second adder (A2) is disposed immediately upstream of the modulation format converter (5) and
**in that**, via said two adders (A1, A2), digital I/Q values that are calculated in at least one modulation generator (12) or are generated from a further digital input data stream can be added in each case upstream of the digital/analog converter (8) to the digital I/Q values of the modulation encoder (11).

2. Signal generator according to Claim 1, **characterized in that**, in the I/Q branches of the modulation
encoder (11), a further, third adder (A3) via which further digital I/Q values generated in a modulation generator (12) can likewise be added in each case to the digital I/Q values of the modulation encoder (11) is disposed downstream of the interpolation filter (6), but upstream of the digital/analog converter (8) and upstream of any correction filter (7) present.

## Revendications

1. Générateur de signal pour la génération d'un signal E/S qui est constitué de deux ou de plusieurs flux de données mis en forme selon des procédés de modulation numériques identiques ou différents, avec un codeur de modulation (11) constitué du couplage en série
d'une unité de codage et de configuration (1, 2),
d'un filtre de bande de base numérique (4) placé en aval dont les propriétés de filtrage sont réglables,
d'un convertisseur de format de modulation (5) numérique placé à la suite,
d'un filtre d'interpolation (6) placé avant ou après ce convertisseur de format de modulation (5),
éventuellement d'un filtre de correction numérique supplémentaire (7)
et d'un convertisseur numérique/analogique (8) avec un filtre passe-bas (9) analogique placé en aval,
moyennant quoi, dans ce codeur de modulation (11), des valeurs E/S numériques correspondantes sont générées à partir d'un premier flux de données d'entrée numériques (3) et les signaux E/S analogiques correspondants sont générés à partir de là après une conversion numérique/analogique,
**caractérisé en ce que**,
dans les branches E/S de ce codeur de modulation (11), un premier additionneur (A1) est placé directement avant le filtre de bande de base (4) et
**en ce que**, lorsque le filtre d'interpolation (6) est placé après le convertisseur de format de modulation (5) entre ce convertisseur de format de modulation (5) et le filtre d'interpolation (6) ou lorsque le filtre d'interpolation (6) est placé avant le convertisseur de format de modulation (5) entre le filtre de bande de base (4) et le convertisseur de format de modulation (5), un deuxième additionneur (A2) est placé directement avant le convertisseur de format de modulation (5) et
**en ce que** des valeurs E/S numériques respectives, qui sont calculées dans au moins un générateur de modulation (12) ou générées à partir d'un autre flux de données d'entrée numériques, peuvent être additionnées en plus aux valeurs E/S numériques du codeur de modulation (11) avant le convertisseur numérique/analogique (8) par l'intermédiaire des ces deux additionneurs (A1, A2).

2. Générateur de signal selon la revendication 1,
**caractérisé en ce que**,
dans les branches E/S du codeur de modulation (11), derrière le filtre d'interpolation (6), mais avant le convertisseur numérique/analogique (8) et avant un filtre de correction (7) éventuellement présent, est placé un troisième additionneur (A3) par l'intermédiaire duquel, à chaque fois avant le convertisseur numérique/analogique (8), d'autres valeurs E/S numériques générées dans un générateur de modulation (12) peuvent être additionnées en plus aux valeurs E/S numériques du codeur de modulation (11).
